Europäisches Patentamt

European Patent Office

Office européen des brevets

(19)

(11) Numéro de publication : **0 520 842 A1**

## (12) DEMANDE DE BREVET EUROPEEN

(21) Numéro de dépôt : **92401181.0**

(22) Date de dépôt : **24.04.92**

(51) Int. Cl.⁵ : **B60N 3/04**

(30) Priorité : **25.06.91 FR 9107822**

(43) Date de publication de la demande :
**30.12.92 Bulletin 92/53**

(84) Etats contractants désignés :
**AT BE CH DE ES FR GB IT LI NL SE**

(71) Demandeur : **Courrège, Michèle Simone Gilberte**
**Anse Toiny, BP 189**
**F-97133 St Barthélémy, Guadeloupe (FR)**

(72) Inventeur : **Courrège, Michèle Simone Gilberte**
**Anse Toiny, BP 189**
**F-97133 St Barthélémy, Guadeloupe (FR)**

(74) Mandataire : **Dronne, Guy et al**
**Cabinet BEAU de LOMENIE, 55, rue**
**d'Amsterdam**
**F-75008 Paris (FR)**

(54) **Tapis de sol de véhicule automobile.**

(57)    L'invention concerne un tapis de sol de véhicule automobile permettant d'éviter l'usure des chaussures lors des opérations de conduite.

Le tapis de sol se compose d'un cadre (30) et d'un treillis (32) formé par des segments (34) définissant entre eux des ouvertures (36). La face du tapis de sol tournée vers le plancher du véhicule est dépourvue de fond. De préférence, l'arête supérieure des segments est munie de poils formant brosse.

fig_2

EP 0 520 842 A1

La présente invention a pour objet un tapis de sol de véhicule automobile.

On sait que l'on dispose souvent sur une partie du plancher d'un véhicule automobile un tapis de sol réalisé en un matériau élastomère, en particulier dans la zone du plancher du véhicule correspondant à l'endroit où le conducteur ou la conductrice pose ses pieds pour actionner les pédales du véhicule. Ces tapis de sol sont en général réalisés en un matériau élastomère relativement déformable pour se conformer à la forme particulière du plancher du véhicule dans cette région et pour protéger le plancher du véhicule proprement dit vis-à-vis de l'usure qui résulte de la pression et du frottement exercé notamment par le talon de chaussure du conducteur.

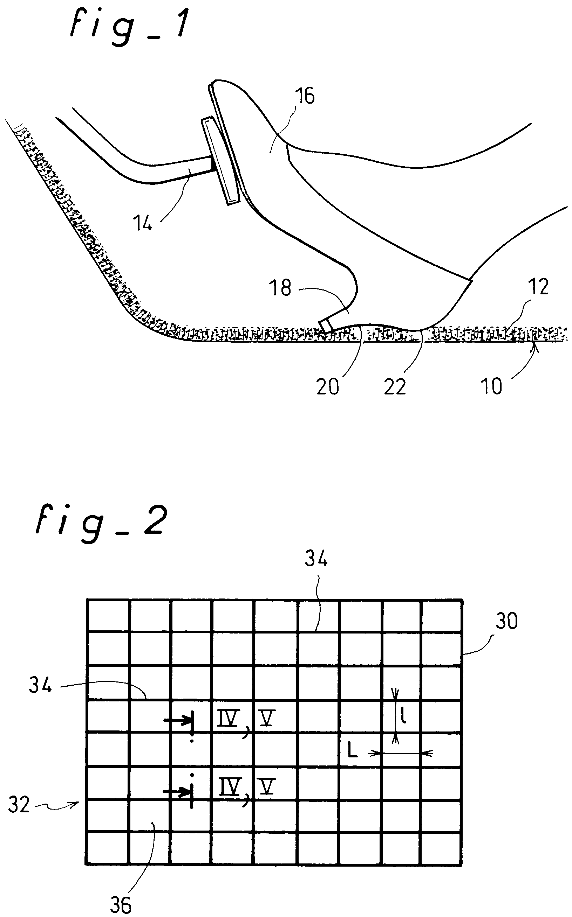

En règle générale, de tels tapis de sol comportent quelques nervures pour éviter que le point d'appui du pied qui est engagé sur les pédales ne glisse. Un inconvénient d'un tel tapis de sol consiste dans le fait que notamment les semelles de l'automobiliste étant souvent recouvertes de particules de poussières ou de gravillons ou de terre, ou tous autres matériaux similaires, le frottement du talon ou de la semelle sur le tapis de sol provoque le dépôt de ces particules sur ledit tapis de sol. Il en résulte que, sous l'effet des mouvements relatifs de la chaussure du conducteur automobile par rapport au tapis de sol, les gravillons et autres poussières se comportent comme un matériau abrasif entraînant l'altération et l'usure d'une partie de la chaussure du conducteur. Cela est particulièrement vrai dans le cas où le conducteur est une femme portant des chaussures à talons. C'est ce qu'on a représenté sur la figure 1 annexée.

Sur cette figure, on a représenté en 10 le plancher du véhicule, en 12 le tapis de sol de type classique, en 14 une des pédales de commande du véhicule et en 16 la chaussure de l'automobiliste, cette chaussure étant munie d'un talon 18.

Comme le montre cette figure, la partie arrière 20 du talon et la tige 22 de la chaussure sont en contact avec le tapis de sol 12 et subissent ainsi, par le mouvement relatif, l'effet d'abrasion dû au dépôt du gravier ou de sable stagnant sur le tapis de sol 12.

La présente invention a pour objet un tapis de sol pour véhicule automobile qui permet d'éviter l'inconvénient mentionné ci-dessus tout en assurant un bon confort pour l'automobiliste.

Pour atteindre ce but, selon l'invention, le tapis de sol pour véhicule automobile se caractérise en ce qu'il comprend un treillis réalisé en un matériau plastique ou élastomérique et un cadre entourant le treillis, ledit treillis comportant une première face tournée vers le plancher du véhicule et une deuxième face sensiblement parallèle à la première face sur laquelle repose le pied du conducteur, ledit treillis étant constitué par des segments raccordés entre eux et définissant entre eux des ouvertures.

On comprend qu'ainsi du fait que le tapis de sol est dépourvu de fond, les particules de graviers ou de sable se déposent dans les ouvertures ménagées entre le treillis évitant ainsi l'effet d'abrasion.

Selon un mode préféré de mise en oeuvre, l'extrémité d'au moins certains segments disposée dans ladite deuxième face est munie de poils, ladite première face étant dépourvue de fond.

D'autres caractéristiques et avantages de la présente invention apparaîtront plus clairement à la lecture de la description qui suit de plusieurs modes de réalisation de l'invention donnés à titre d'exemples non limitatifs. La description se réfère aux figures annexées sur lesquelles :

- la figure 1, déjà décrite, est une vue en coupe verticale montrant un tapis de sol de type connu ;
- la figure 2 montre en vue de dessus un premier mode de réalisation du tapis de sol ;
- la figure 3 montre également en vue de dessus une variante de réalisation du tapis de sol ;
- la figure 4 est une vue en coupe partielle selon la ligne IV-IV de la figure 2 et en perspective ;
- la figure 5 est une vue en coupe partielle selon la ligne IV-IV de la figure 2 et en perspective selon une première variante de réalisation ; et
- les figures 6 et 7 sont des vues en coupe partielle selon la ligne IV-IV de la figure 2 et en perspective selon une deuxième et une troisième variante de réalisation de l'invention.

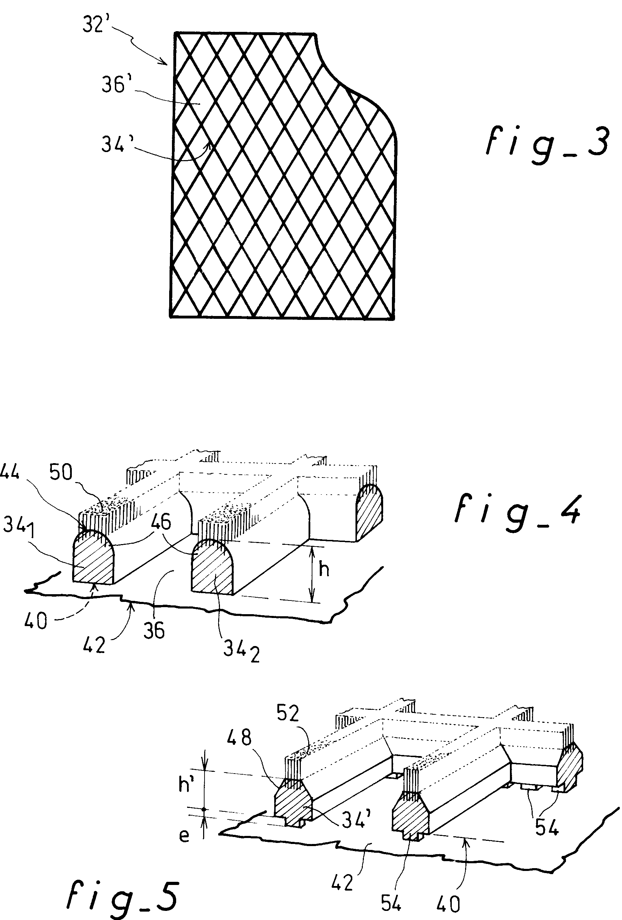

Comme le montre les figures 2 et 3, le tapis de sol est constitué par un cadre 30 entourant un treillis, portant la référence générale 32. De préférence, le cadre 30 et le treillis 32 ne forment qu'une seule et même pièce obtenue par moulage d'un matériau plastique ou d'un élastomère présentant les propriétés physiques requises notamment une déformabilité suffisante pour s'adapter à la forme du plancher du véhicule. Le treillis 32 est constitué par un ensemble de segments tels que 34 qui sont raccordés entre eux. Dans le mode de réalisation de la figure 2, les mailles du treillis sont rectangulaires et définissent ainsi des ouvertures 36 également rectangulaires de côtés I et L.

Selon le mode de réalisation de la figure 3, le treillis 32′ est en forme de losanges et constitué par les segments 34′. Les ouvertures 36′ sont également en forme de losanges. D'autres formes de treillis pourraient bien sûr être envisagées telles que des cercles, les segments étant alors circulaires. Les cercles sont raccordés entre eux tangentiellement ou par l'intermédiaire de segments rectilignes de faible longueur.

Le tapis de sol et donc le treillis présentent une face inférieure 40 tournée vers le plancher 42 de la voiture et une face supérieure 44 destinée à recevoir le pied du conducteur. Ces deux faces sont sensiblement parallèles. Sur la figure 4, l'extrémité 46 de chaque segment 34 débouchant dans la face supérieure 44 a une forme arrondie. Au contraire, selon le mode de réalisation de la figure 5, l'extrémité supérieure de chaque segment 34' a la forme d'un biseau. On voit donc que la face inférieure 40 du tapis de sol est dépourvue de fond qui obturerait les ouvertures 36 ou 36'.

Selon un mode préféré de mise en oeuvre, les extrémités supérieures 44 et 48 des segments formant les treillis 32 et 32' sont munis de rangées de poils 50 ou 52 dont les racines sont implantées dans les segments 34 ou 34'. Selon une variante de réalisation de l'invention, seule une partie des segments est munie de rangées de poils 50. Dans le cas du tapis de sol de la figure 2, par exemple seuls les segments qui sont perpendiculaires à la longueur du véhicule sont munis de poils. Les poils peuvent être en paille, en brins de jute, en jonc ou de préférence en matériau plastique synthétique convenable.

On comprend que, grâce à l'invention, lors du mouvement relatif de la chaussure de l'automobiliste par rapport au tapis de sol, les particules telles que du sable ou des graviers qui peuvent se détacher de la chaussure sont recueillies dans les ouvertures 36 ou 36' du treillis. Pour cela, la hauteur h ou h' des segments entre les faces supérieure et inférieure du treillis est suffisante pour permettre l'accumulation du sable et autres matériaux en évitant qu'elles ne restent sur la face supérieure des segments formant le treillis.

En outre, dans le cas où le tapis de sol comporte des poils, on obtient de plus un effet de brossage des chaussures.

Selon un mode perfectionné de réalisation illustré par la figure 5, la face inférieure 40 du treillis peut être munie de picots tels que 54 ou d'autres protubérances convenables, de telle manière que la face 40 ne soit pas en contact direct avec le plancher 42 du véhicule. Cette disposition permet de profiter de la partie inclinée du plancher du véhicule, à proximité des pédales, pour entraîner l'évacuationn du sable et autres particules vers la partie inférieure du plancher et éviter leur stagnation dans les ouvertures 36'.

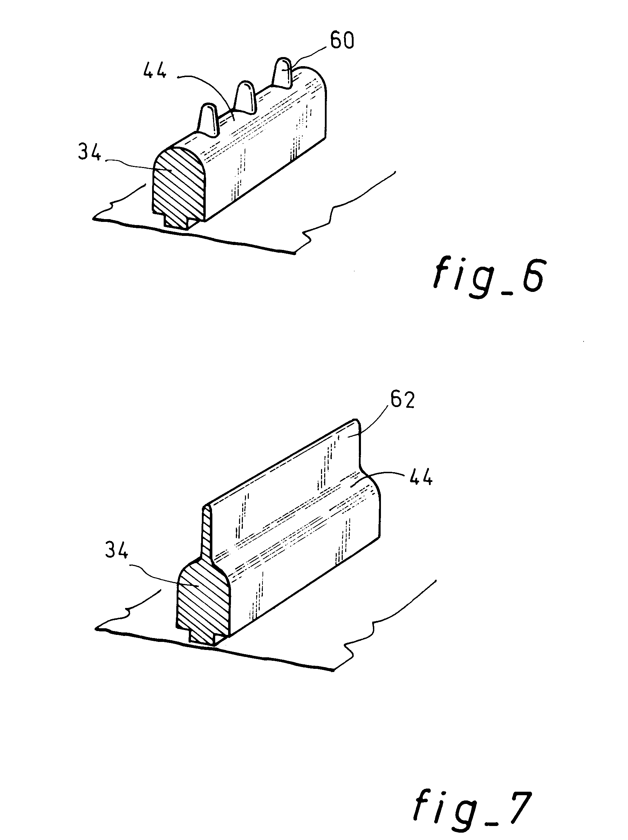

La figure 6 montre un autre mode de réalisation du tapis de sol et plus précisément des segments de celui-ci. La partie supérieure 44 de certains au moins des segments 34 est arrondie et munie de picots 60 régulièrement répartis sur la longueur du segment. Les picots ont par exemple une hauteur de 5 mm, si le segment a une hauteur de 1 cm, et sont distants les uns des autres d'environ 5 mm. Ils ont un diamètre suffisamment réduit pour présenter une certaine flexibilité. Par exemple ils ont un diamètre de 2 à 3 mm. On comprend que ces picots jouent le même rôle que les poils des modes de réalisation des figures 4 et 5 mais ils peuvent être réalisés par moulage en même temps et avec le même matériau que le reste du tapis de sol.

La figure 7 montre un autre mode de réalisation dans lequel la partie supérieure 44 du segment 34, ou de certains des segments 34, est munie d'une lèvre flexible 62 s'étendant selon la longueur du segment.

Cette lèvre 62 joue exactement le même rôle que les poils ou les picots et elle peut être commodément réalisée lors du moulage de l'ensemble du tapis de sol.

En outre, il va de soi que le cadre 30 du tapis de sol n'est pas nécessairement rectangulaire. Il peut avantageusement comporter des parties courbes se conformant au contour du plancher du véhicule dans la zone où sont implantées les pédales.

## Revendications

1. Tapis de sol de véhicule automobile, caractérisé en ce qu'il comprend un treillis (32, 32') réalisé en un matériau plastique ou élastomérique et un cadre (30, 30') entourant le treillis, ledit treillis comportant une première face (40) tournée vers le plancher (42) du véhicule et une deuxième face (44) sensiblement parallèle à la première face sur laquelle repose le pied du conducteur, ledit treillis étant constitué par des segments (34, 34') raccordés entre eux et définissant entre eux des ouvertures (36, 36'), ladite première face (40) étant dépourvue de fond, par quoi les particules arrachées aux chaussures du conducteur sont receuillies dans lesdits orifices.

2. Tapis de sol de véhicule selon la revendication 1, caractérisé en ce que ledit treillis (32) présente des ouvertures (36) de forme rectangulaire.

3. Tapis de sol de véhicule selon la revendication 1, caractérisé en ce que ledit treillis (32') présente des ouvertures (36') en forme de losange.

4. Tapis de sol de véhicule selon la revendication 1, caractérisé en ce que ledit treillis présente des ouvertures circulaires.

5. Tapis de sol de véhicule selon l'une quelconque des revendications 1 à 4, caractérisé en ce que ledit treillis comporte dans sa première face (40) des protubérances (52) pour créer un écartement entre ladite première face (40) et le plancher (42) du véhicule.

6. Tapis de sol de véhicule selon l'une quelconque des revendications 1 à 5, caractérisé en ce que l'extrémité supérieure de chaque segment (34') a la forme d'un biseau.

7. Tapis de sol de véhicule selon l'un quelconque des revendications 1 à 6, caractérisé en ce que l'extrémité d'au moins certains segments (34, 34') disposée dans ladite deuxième face (44) sont munies de poils.

8. Tapis de sol de véhicule selon l'une quelconque des revendications 1 à 6, caractérisé en ce que l'extrémité supérieure (44) d'au moins certains segments est munie de picots (60).

9. Tapis de sol de véhicule selon l'une quelconque des revendications 1 à 6, caractérisé en ce que l'extrémité supérieure (44) d'au moins certains segments (34) est munie d'une lèvre flexible.

*fig_1*

*fig_2*

32'

36'

34'

fig_3

fig_4

44
50
34₁
46
40
42
36
342
h

52
48
h'
e
34'
42
54
40
54

fig_5

*fig_6*

*fig_7*

EP 0 520 842 A1

| Office européen des brevets | RAPPORT DE RECHERCHE EUROPEENNE | Numero de la demande |
|---|---|---|
| | | EP 92 40 1181 |

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 468 910 (MORRISON) <br> * le document en entier * <br> --- | 1,2 | B60N3/04 |
| A | US-A-4 415 618 (MCCLUNG) <br> * le document en entier * <br> --- | 1,7 | |
| A | FR-A-2 328 431 (DAUPHANT) <br> * page 2, ligne 10 - page 2, ligne 37; <br> figures 1-3 * <br> --- | 1,3 | |
| A | US-A-3 488 081 (NOLEN) <br><br> ----- | | |

| | DOMAINES TECHNIQUES RECHERCHES (Int. Cl.5) |
|---|---|
| | B60N |

Le présent rapport a été établi pour toutes les revendications

| Lieu de la recherche | Date d'achèvement de la recherche | Examinateur |
|---|---|---|
| LA HAYE | 21 SEPTEMBRE 1992 | HORVATH R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

8